# EUROPEAN PATENT SPECIFICATION

(11) **EP 0 279 502 B1**
(45) Date of publication and mention of the grant of the patent: **07.04.1993**
(21) Application number: 88300041.6
(22) Date of filing: 05.01.1988
(51) Int. Cl.: C08L 67/00, C08L 77/00, C08J 3/22

(54) **Single step bulk process for high impact polyester or polyamide master batches, products thereof and blends with polyesters or polyamides**
Einstufenmassenherstellung für schlagzähe Polyester- oder Polyamid-Vormischungen, Produkte daraus und Mischungen mit Polyestern oder Polyamiden
Procédé en masse en une étape pour des mélanges-mères de polyesters ou de polyamides résistant au choc, leurs produits et mélanges avec des polyesters ou des polyamides

(30) Priority: 16.01.1987 US 4090
(43) Date of publication of application: 24.08.1988
(73) Proprietor: COPOLYMER RUBBER & CHEMICAL CORPORATION, Baton Rouge Louisiana 70821 (US)
(72) Inventor: Phadke Shrikant Vasudeo, Baton Rouge §Louisiana 70817 (US)
(74) Representative: West, Alan Harry

(56) References cited:
- WO-A-86/04076
- US-A- 3 328 327

## Description

This invention is an improvement over the invention described in WO 86/04076. The invention relates to polyester polymeric materials and particularly polybutylene terephthalate having improved toughness and impact strength and to materials and methods for producing same. It also relates to polyamide resins having improved toughness and impact strength as well as materials and methods for achieving same.

The invention will hereinafter be described primarily with respect to the thermoplastic polyester resins but it will be understood that the concepts will have similar applications to the improvement of the strength properties of polyamide resins.

As described in WO 86/04076, the utility of thermoplastic polyesters in engineering type applications is limited where toughness and high impact strength are required. Unmodified thermoplastic polyesters typically exhibit room temperature impact strengths of 1 ft-lb/inch of notch or less on the Izod scale of impact strength.

Improvement of the toughness and impact strength of thermoplastic polyester has been the subject matter of considerable research and development by the most highly skilled in the art. Much of such earlier research and development has been addressed to the admixture of additives to the polyester, with particular attention being given to the addition of rubber-like or elastomeric materials, such as ethylene-propylene copolymers (EPM) or ethylene-propylene-polyene terpolymers (EPDM), with a view towards improving impact strength and toughness without interfering with other of the desirable properties of the polyester. The desired level of improvement has not been achieved with the addition of such rubber-like or elastomeric materials by reason of the relative incompatibility between such rubber-like or elastomeric materials and polyester resins.

Attempts have been made to overcome this problem and increase the compatibility between the rubber-like or elastomeric materials and polyester resins by modification of the rubber-like or elastomeric materials with sites that enable the polyester resins to adhere to the elastomeric materials.

U.S. Patent No. 3,435,093 describes blends of polyethylene terephthalate and an ionic hydrocarbon copolymer of alpha-olefins of the formula R-CH=CH₂ in which R is hydrogen (ethylene) or an alkyl radical of 1-3 carbon atoms (propylene-pentene) with the copolymer modified with an alpha, beta-ethylenically unsaturated carboxylic acid containing 3-5 carbon atoms. The patent does not teach or suggest the components of the additive employed or the concepts employed in the practice of the present invention.

The problem was faced directly in U.S. Patent No. 4,172,859. The patent is somewhat confusing in that it seeks to cover the waterfront by listing an endless number of materials and combinations thereof for use as additives to improve the toughness and impact strength of polyester and polycarbonate resins. In the patent, emphasis is placed on the importance of the particle size and tensile modulus of the copolymer additive. While it contemplates the use of ethylene-propylene copolymers and ethylene-propylene-polyene terpolymers, from amongst the large number of other varieties of materials, and the use of alpha, beta-ethylenically unsaturated carboxylic and dicarboxylic acids and anhydrides as modifying agents to provide sites which adhere to the matrix resin, the patent does not recognize the concepts of the present invention.

In WO 86/04076, of which this is an improvement, the invention described therein is based on the thought that an ethylene, C₃-C₁₆ mono-olefin, polyene and preferably an ethylene, propylene, diene rubbery interpolymer would make a good impact modifier for thermoplastic polyester, if the two could be made compatible. The two are relatively incompatible because the rubber is a hydrocarbon while the polyester is a much more polar substance. Thus, the objective of the invention described and claimed therein was addressed to the modification of the ethylene, mono-olefin, polyene interpolymer rubber greatly to improve its compatibility with polyester to provide an improved impact modifier for the thermoplastic polyester resin.

Briefly described, the features of the invention of WO 86/04076 are embodied in a composition comprising 60-90 percent by weight of a matrix resin in the form of a polyester blended with 40-10 percent by weight of an unsaturated rubber formed by copolymerization of ethylene, one or more mono-olefins, and one or more polyenes in which the backbone unsaturated rubber component has been modified with an ester of an alpha, beta-unsaturated acid having an epoxide functionality on the alkoxy portion, such as the ester derived from methacrylic acid and an epoxy alcohol, and which is attached to the backbone rubber chiefly by way of a grafting reaction with little if any cross-linking reaction.

Polyesters and their method of manufacture are well known to the skilled in the art and are readily available in commerce and, therefore, detailed description thereof will not be given herein. The invention will be described herein with reference to polybutylene terephthalate as a preferred polyester, such as marketed by the General Electric Company under the trademark Valox 310 and Valox 315, although others of the polyesters, such as described in U.S. Patent No. 4,172,859, could be used in the practice of the invention for their improvement in toughness and impact strength.

In accordance with the invention, there is now provided a method for preparing a masterbatch for blending with a polyester or polyamide matrix resin to form a thermoplastic molding composition, the method comprising reacting in a single step in the presence of a free radical initiator from 50 to 20 parts by weight of polyester or polyamide matrix resin with from 50 to 80 parts by weight of backbone rubber selected from rubber components formed by interpolymerization of ethylene, one or more C₃-C₁₆ mono-olefins and one or more polyenes, copolymer rubbers formed by copolymerization of ethylene and one or more C₃-C₁₂ mono-olefins, and mixtures thereof, and with from 2 to 15 parts by weight per 100 parts by weight of backbone rubber of an epoxide functional ester of acrylic or methacrylic acid having an epoxide functionality.

There is provided also a method of producing a thermoplastic polyester- or polyamide-based composition having improved toughness and impact strength comprising blending a master batch prepared in the manner described above with an additional amount of the matrix resin.

Briefly described, the features of this invention are embodied in a thermoplastic molding composition comprising 60-90 percent by weight of a matrix resin in the form of a polyester or polyamide reacted with 40-10 percent by weight of a rubber formed by copolymerization of ethylene, one or more mono-olefins, and preferably with one or more polyenes, and an ester of an alpha, beta-unsaturated acid having an epoxide functionality on the alkoxy portion, such as the ester derived from methacrylic acid and an epoxy alcohol, and which attaches to the backbone rubber chiefly by way of a grafting reaction.

It has been found, in accordance with the practice of this invention, that desirable improvements in strength properties and in the economy of manufacture can be achieved when the materials are first formulated into a masterbatch containing the backbone rubber, a monomer having an epoxide functionality, and a catalyst, all of which are combined for reaction with a fraction of the matrix resin. The final product is thereafter formed by admixture or preferably thermal blending of the masterbatch material with the remainder of the matrix resin to form the final thermoplastic composition, from which various products can be molded having the described improved strength properties.

While the described masterbatch could be formed by dispersion of the grafted rubber of WO 86/04076 with less than the full increment of matrix resin of the final thermoplastic composition, in the practice of this invention the masterbatch is formed by a single step bulk process wherein the separate ingredients forming the masterbatch are combined for reaction in an extruder, Banbury mixer, or other melt processing equipment. This not only eliminates the need to prepare separately a grafted rubber and its subsequent dispersion in the less than full amount of matrix resin, but it also permits a different reaction between the ingredients whereby a more desirable and uniform system is obtained which functions more effectively in the final combination with the remainder of the matrix resin to yield products molded therefrom, having improved properties.

As the backbone rubber component, it is preferred to make use of an EPDM formed by interpolymerization of ethylene, one or more mono-olefins having from 3-16 carbon atoms, preferably propylene, and one or more polyenes. In the practice of this invention, the EPDM component of the masterbatch can be substituted in whole or in part by an EPM rubber.

As the EPM rubber, use can be made of an ethylene-mono-olefin and preferably an ethylene-propylene copolymer rubber formed by copolymerization in solution, in the presence of a Ziegler-type catalyst, of ethylene and one or more mono-olefins, preferably propylene, but which may include 1-butene, 1-pentene, or other mono-olefins having 3-12 carbon atoms. The ratio of ethylene to propylene or other C₃-C₁₂ mono-olefins may range from 10-95 moles of ethylene to 90-5 moles of propylene or other mono-olefins. The preferred range of ethylene to propylene or other mono-olefin is 45-75 moles of ethylene to 55-25 moles of propylene or other mono-olefin.

In the preparation of the EPDM interpolymer rubber, the polyene monomer containing a plurality of carbon-to-carbon double bonds may be selected from those disclosed in the prior art for use as third monomers in the preparation of ethylene-mono-olefin-polyene terpolymers, including open chain polyunsaturated hydrocarbons containing 4-20 carbon atoms, such as 1,4-hexadiene, monocyclic polyenes and polycyclic polyenes. The polyunsaturated bridged ring hydrocarbons or halogenated bridged ring hydrocarbons are preferred. Examples of such bridged ring hydrocarbons include the polyunsaturated derivatives of bicylo(2,2,1) heptane wherein at least one double bond is present in one of the bridged rings, such as dicyclopentadiene, bicyclo(2,2,1)hepta-2,5-diene, the alkylidene norbornenes, and especially the 5-alkylidene-2-norbornenes wherein the alkylidene group contains 1-20 carbon atoms and preferably 1-8 carbon atoms, the alkenyl norbornenes, and especially the 5-alkenyl-2-norbornenes wherein the alkenyl group contains about 3-20 carbon atoms and preferably 3-10 carbon atoms. Other bridged ring hydrocarbons include polyunsaturated derivatives of bicyclo(2,2,2) octane as represented by bicyclo(3,2,1) octane, polyunsaturated derivatives of bicyclo(3,3,1) nonane, and polyunsaturated derivatives of bicyclo(3,2,2) nonane.

Specific examples of preferred bridged ring compounds include 5-methylene-2-norbornene, 5-ethylidene-2-norbornene, 5-n-propylidene-2-norbornene, 5-isobutylidene-2-norbornene, 5-n-butylidene-2-norbornene, dicyclopentadienes; the methyl butenyl norbornenes such as 5-(2-methyl-2-butenyl)-2-norbornene or 5-(3-methyl-2-butenyl)-norbornene, and 5-(3,5-dimethyl-4-hexenyl)-2-norbornene.

The EPDM backbone rubber may contain chemically bound therein molar ratios of ethylene to propylene or other C₃-C₁₆ mono-olefin varying between 10-95 to 90-5 and preferably between 55-70 to 45-30. The polyene or substituted polyene may be chemically bound therein in an amount of 0.1 to 10 mole percent, and preferably 0.3 to 10 mole percent. The level of unsaturation in the backbone rubber may range from 0-20 double bonds per 1,000 carbon atoms in the polymer chain.

The interpolymerization is carried out in the presence of a Ziegler catalyst of the type well known to the prior art. Such Ziegler type catalysts are disclosed in a large number of patents, such as U.S. Patent Nos. 2,933,480; 3,093,620; 3,093,621; 3,211,709 and 3,113,115. Examples of Ziegler catalysts include metal organic coordination catalysts prepared by contacting a compound of a heavy metal of the group IV-a, V-a, VI-a and VII-a of the Mendeleeff periodic system of elements, such as titanium, vanadium and chromium halides with an organic-metallic compound of a metal of groups I, II, or III of the Mendeleeff periodic system which contains at least one carbon-metal bond, such as trialkyl aluminum, and alkyl aluminium halides in which the alkyl groups contain from 1-20 and preferably 1-4 carbon atoms.

The preparation of EPM and EPDM polymers is well known and is fully described in such patents as U.S. Patent Nos. 2,993,480; 3,093,621; 3,211,709; 3,646,168; 3,790,519; 3,884,993; 3,894,999 and 4,059,654, amongst many others.

As the ester of a methacrylic acid which has an epoxide functionality on the alkoxy portion, it is preferred to make use of glycidyl methacrylate, although other epoxy compounds having the following general formula may be used: 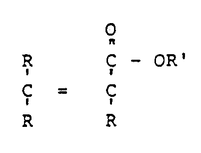
in which R' is an organic group having an epoxide functionality and R is hydrogen, methyl, ethyl, propyl or other alkyl, aralkyl, cyclic, or aromatic group. Representative of such other modifying agents are glycidyl acrylate, glycidyl 2-ethylacrylate, glycidyl 2-propylacrylate and the like.

The desired results are achieved when the amount of epoxide component charged is within the range of 2-15 parts by weight per 100 parts by weight of the backbone rubber.

The reaction to form the masterbatch is carried out in the presence of a peroxide catalyst such as a dialkyl peroxide, dicumyl peroxide, t-butyl hydroperoxide, benzoyl peroxide, t-butylperoctanoate, di-t-butylperoxide, cumene hydroperoxide, t-butylperbenzoate, 2,5-dimethyl-2,5-di-(t-butylperoxy) hexane, or other free radical source capable of hydrogen abstraction, as represented by alkyl peroxy esters, alkyl peroxides, alkyl hydroperoxides, diacylperoxides and the like, which is added with the EPDM or EPM, reactive agent, and matrix resin in bulk, to the reaction chamber. Such catalyst component is employed in an amount within the range of 0.1-3 parts per 100 parts by weight of the rubber.

In accordance with the practice of this invention, the reaction to form the masterbatch is carried out in the presence of a portion of the matrix (polyester or polyamide) resin making up the final product. The desired improvements can be obtained when the reaction is carried out in combination with 10-80 percent and preferably within the range of 20-50 percent by weight of the amount of matrix resinous component of the final product. This intermediate reaction product, which contains some of the matrix resin, is referred to herein as a masterbatch with which the remainder of the matrix resin can be blended. Optimum results are secured when the rubbery polymer and matrix resin in the masterbatch are present in the ratio of 50-80 parts by weight rubbery polymer to 50-20 parts by weight matrix resin and preferably 60-80 parts by weight rubbery polymer to 40-20 parts by weight matrix resin.

The masterbatch that is formed appears to have improved compatibility with the remainder of the matrix resin subsequently blended therewith to provide a more uniform product. The initial reaction to form the masterbatch is carried out preferably, from the standpoint of simplicity, cost and equipment, by a mastication process or in melt processing equipment wherein the various components are worked together in their solid states, such as in an internal mixer, extruder and the like at elevated temperatures such as at a temperature within the range of 175-290°C (350-550°F) and preferably 200-260°C (400-500°F). Blending of the masterbatch with the remainder of the matrix resin can be carried out under similar conditions while the ingredients are in the form of a hot melt or plastic state.

### Example 1

This example illustrates a process in which the full increment of matrix resin is reacted with the other ingredients to form the final molding composition in a single step.

The following composition was extruded three times through a 25mm (1") 20/1 L/D, single-screw (Killion) extruder at the temperatures of 230°C (450°F) in the barrel and 220°C (425°F) in the die. Composition: 100 grams of a 2.2 RSV 66/34 (molar ratio) ethylene/propylene, 8 weight percent ethylidene norbornene EPDM polymer (EPsyn® 55, Copolymer Rubber & Chemical Corporation, Baton Rouge, Louisiana), 422 grams of polybutylene terephthalate (Valox 315, General Electric Company), 5 grams of glycidyl methacrylate, and 0.5 grams of 2,5-dimethyl-2,5-di(t-butylperoxy) hexane. The extruded strands were air-cooled and chopped into pellets. The pellets were molded into test specimens for tensile and notched Izod impact strength using a plunger injection molder with a cavity temperature of 275-280°C (525-535°F) and a mold temperature of 90°C (200°F).

The following examples illustrate the invention in first forming a masterbatch in which a portion of the matrix resin is pre-reacted with the backbone rubber and epoxide functionality.

### Example 2

A composition consisting of 160 grams of EPsyn 55, 53 grams of Valox 315, 12 grams of glycidyl methacrylate, and 1.2 grams of 2,5-dimethyl-2,5-di(t-butylperoxy) hexane was extruded three times through a 25mm (1") 20/1 L/D, single-screw (Killion) extruder at the temperature of 220°C (425°F) in the barrel and 205°C (400°F) in the die. The extruded strands were air-cooled and chopped into pellets.

### Example 3

A composition consisting of 188.2 grams of the pellets prepared in Example 2 and 517.5 grams of Valox 315 was extruded three times through a 25mm (1") 20/1 L/D single-screw (Killion) extruder at the temperature of 230°C (450°F) in the barrel and 220°C (425°F) in the die. The extruded strands were air-cooled and chopped into pellets. The pellets were molded into test specimens for tensile and notched Izod impact strengths as described in Example 1. The pellets were also molded into test specimens for knitline impact strength using a double-gated mold on a screw injection molder.

### Example 4

The same as Example 2, except 160 grams of Valox 315 were used instead of 53 grams.

### Example 5

A composition consisting of 291.7 grams of pellets from Example 4 above and 437.6 grams of Valox 315 was extruded, pelletized and molded into test specimens as described in Example 3.

### Example 6

This is similar to Example 2, except adipic acid was used as an additional ingredient and the quantities of the various ingredients used were as follows: 900 grams of EPsyn 55, 300 grams of Valox 315, 67.5 grams of glycidyl methacrylate, 6.75 grams of 2,5-dimethyl-2,5-di(t-butylperoxy) hexane, and 7.02 grams of adipic acid.

### Example 7

A composition consisting of 106.7 grams of pellets from Example 6 above and 293.3 grams of Valox 315 was extruded, pelletized and molded into test specimens as described in Example 3.

### Example 8

The base EPDM of Example 1 was fed at a rate of 2.25 kg/hour (5 lbs/hour) to a co-rotating twin-screw extruder (Werner & Pfleiderer Corporation's ZSK-30, 12 barrels). A 10/1 mixture of glycidyl methacrylate/2,5-dimethyl-2,5-di(t-butylperoxy) hexane was fed also to the hopper at a rate of 8 parts per hundred parts rubber (phr) GMA/1.12 phr 2,5-dimethyl-2,5-di(t-butylperoxy) hexane. The temperature setpoints on the extruder were Zone 1 = 80°C, all other zone 205°C. The extrudate was cooled in a water bath and pelletized. The pellets were oven dried at 70°C. The grafted rubber was found to contain 5.89% bound GMA, and it had a gel content of 53.5%.

The dried pellets from above were blended with Valox 315 in a 25mm (1") single-screw extruder to form a 75/25 rubber/PBT masterbatch, which was subsequently diluted with additional Valox 315 to a composition 80/20 PBT/rubber, the properties of which are given in Table I under Example 8.

It should be noted that Example 8 differs from Examples 1 through 4 in the following significant aspect. In Example 8, glycidyl methacrylate grafted EPsyn 55 was prepared in a separate step in the absence of Valox 315.

The molded samples prepared in all the above examples were stored in moisture-proof polyethylene bags for at least 16 hours prior to testing. The test methods were as follows:
(a) Notched Izod impact strength: ASTM D256.
(b) Knitline Izod impact strength was measured on unnotched double-gated samples. Except for this variation, the procedure was similar to ASTM D256.
(c) Tensile strength was measured according to ASTM D638.
The results of the above tests are listed in Table I.

**TABLE I**

| Properties of Samples Molded from Final Blends | | | | | | |
|---|---|---|---|---|---|---|
| Example | Percent Valox 315 in | | Tensile Strength, MPa (psi) | Izod Impact Strength J/mm (ft.lbs./in.) | | |
| | Masterbatch | Final Blend | | Notched | | Unnotched Knitline @25°C |
| | | | | @25°C | @-20°C | |
| 1* | 81 | 81 | 26.34 (3820) | 0.064 (1.2) | - | - |
| 3 | 23.43 | 79.6 | 29.37 (4260) | 0.662 (12.4) | 0.162 (3.04) | 0.960 (18.0) |
| 5 | 48.02 | 79.2 | 28.96 (4200) | 0.646 (12.1) | 0.163 (3.06) | 0.678 (12.7) |
| 7 | 23.41 | 79.6 | 28.06 (4070) | 0.684 (12.8) | 0.176 (3.3) | 0.935 (17.5) |
| 8** | 25 | 80 | 26.68 (3870) | 0.689 (12.9) | 0.342 (6.4) | 0.812 (15.2) |

| | | | | | | |
|---|---|---|---|---|---|---|
| * In this case, the final blend is the same as the masterbatch. | | | | | | |
| ** Masterbatch was prepared using a pregrafted rubber. | | | | | | |

It will be seen from the above, by comparison of Example 1 with Examples 3, 5 and 7, that the strength properties, and in particular, the notched and unnotched impact strengths are greatly improved, in accordance with the practice of this invention, when use is made of a masterbatch containing a portion of the matrix resin pre-reacted with the EPDM rubber and epoxy compound in the presence of a peroxide catalyst. It will also be seen that the described improvements can be developed in a single step bulk process (Examples 3, 5 and 7) as well as in a two step process wherein the masterbatch is formed by dispersion of a previously grafted EPDM in the less than full increment of matrix resin (Example 8).

Similar improvements in strength properties are produced when a polyamide resin is substituted in equivalent amounts for the polyester resins in the foregoing examples.

As previously pointed out, the unsaturated EPDM backbone rubber can be substituted in whole or in part by an EPM backbone rubber containing no unsaturated groups, especially when the reactive agent is a glycidyl acrylate. The preparation of suitable EPM rubbers is well known to the skilled in the art, reference being made to U.S. Patent No. 4,594,386.

## Claims

1. A method of preparing a masterbatch for blending with a polyester or polyamide matrix resin to form a thermoplastic molding composition, the method comprising reacting in a single step in the presence of a free radical initiator from 50 to 20 parts by weight of polyester or polyamide matrix resin with from 50 to 80 parts by weight of backbone rubber selected from rubber components formed by interpolymerization of ethylene, one or more C₃-C₁₆ mono-olefins and one or more polyenes, copolymer rubbers formed by copolymerization of ethylene and one or more C₃-C₁₂ mono-olefins, and mixtures thereof, and with from 2 to 15 parts by weight per 100 parts by weight of backbone rubber of an ester of acrylic or methacrylic acid having an epoxide functionality on the alkoxy portion.

2. A method according to claim 1, which comprises reacting from 40 to 20 parts by weight of matrix resin with from 60 to 80 parts by weight of backbone rubber.

3. A method according to claim 1 or claim 2, wherein the ethylene/mono-olefin copolymer rubber is an ethylene-propylene copolymer rubber.

4. A method according to claim 3, wherein the ethylene/propylene copolymer rubber contains units of ethylene and propylene in a molar ratio of 10-95 to 90-5.

5. A method according to any one of claims 1 to 4, wherein the ethylene/mono-olefin/polyene rubber contains units of ethylene and mono-olefin in a molar ratio of 10-95 to 90-5.

6. A method according to any one of claims 1 to 5, wherein the amount of polyene in the ethylene/mono-olefin/polyene rubber is such to provide up to 20 C=C groups per 1000 carbon atoms in the rubber.

7. A method according to any one of claims 1 to 6, wherein the ethylene/mono-olefin/polyene rubber is an ethylene/propylene/polyene rubber.

8. A method according to claim 7, wherein the polyene is 5-ethylidene-2-norbornene.

9. A method according to any one of claims 1 to 8, wherein the epoxide functional ester is glycidyl acrylate or glycidyl methacrylate.

10. A method according to any one of claims 1 to 9, carried out at a temperature of 175-290°C (350-550°F).

11. A method according to any one of claims 1 to 10, carried out in the presence of 0.1 to 3.0 parts by weight peroxide catalyst per 100 parts by weight backbone rubber.

12. A method according to any one of claims 1 to 11, carried out in a melt processor.

13. A method of producing a thermoplastic polyester- or polyamide-based composition having improved toughness and impact strength comprising first forming a masterbatch by a method according to any one of claims 1 to 12, and thereafter blending the masterbatch with an additional amount of the matrix resin.

14. A method according to claim 13, wherein the additional amount of matrix resin constitutes the balance of the 20-80 percent of the matrix resin used in the preparation of the masterbatch.

15. A method according to claim 13, wherein the additional amount of matrix resin constitutes the balance of the 20-60 percent of the matrix resin used in the preparation of the masterbatch.

## Patentansprüche

1. Verfahren zur Herstellung einer Vormischung zur Vermischung mit einem Polyester- oder Polyamidmatrixharz zur Bildung einer thermoplastischen Formmasse, welches Verfahren die einstufige Umsetzung in Gegenwart eines freie Radikale erzeugenden Initiators von 50 bis 20 Gew.-Teilen eines Polyester- oder Polyamidmatrixharzes mit 50 bis 80 Gew.-Teilen eines Grundgerüstkautschuks, welcher aus durch Interpolymerisation von Ethylen, einem oder mehreren C₃-C₁₆-Monoolefinen und einem oder mehreren Polyenen gebildeten Kautschukkomponenten, durch Copolymerisation von Ethylen und einem oder mehreren C₃-C₁₂-Monoolefinen gebildeten Copolymerkautschuken und Mischungen hiervon gewählt ist, und mit 2 bis 15 Gew.-Teilen pro 100 Gew.-Teilen des Grundgerüstkautschuks eines Esters der Acryl- oder Methacrylsäure mit einer Epoxidfunktionalität auf dem Alkoxyteil umfaßt.

2. Verfahren nach Anspruch 1, umfassend die Umsetzung von 40 bis 20 Gew.-Teilen des Matrixharzes mit 60 bis 80 Gew.-Teilen des Grundgerüstkautschuks.

3. Verfahren nach Anspruch 1 oder 2, wobei der Ethylen/Monoolefin-Copolymerkautschuk ein Ethylen-Propylen-Copolymerkautschuk ist.

4. Verfahren nach Anspruch 3, wobei der Ethylen/Propylen-Copolymerkautschuk Ethylen- und Propyleneinheiten in einem Molverhältnis von 10-95 zu 90-5 enthält.

5. Verfahren nach mindestens einem der Ansprüche 1 bis 4, wobei der Ethylen/Monoolefin/Polyen-Kautschuk Ethylen- und Monoolefineinheiten in einem Molverhältnis von 10-95 zu 90-5 enthält.

6. Verfahren nach mindestens einem der Ansprüche 1 bis 5, wobei die Menge an Polyen in dem Ethylen/Monoolefin/Polyen-Kautschuk so bemessen ist, daß bis zu 20 C=C-Gruppen pro 1000 Kohlenstoffatomen in dem Kautschuk vorliegen.

7. Verfahren nach mindestens einem der Ansprüche 1 bis 6, wobei der Ethylen/Monoolefin/Polyen-Kautschuk ein Ethylen/Propylen/Polyen-Kautschuk ist.

8. Verfahren nach Anspruch 7, wobei das Polyen 5-Ethyliden-2-norbornen ist.

9. Verfahren nach mindestens einem der Ansprüche 1 bis 8, wobei der epoxidfunktionelle Ester Glycidylacrylat oder Glycidylmethacrylat ist.

10. Verfahren nach mindestens einem der Ansprüche 1 bis 9, welches bei einer Temperatur von 175-290°C (350-550°F) durchgeführt wird.

11. Verfahren nach mindestens einem der Ansprüche 1 bis 10, welches in Gegenwart von 0,1 bis 3,0 Gew.-Teilen eines Peroxidkatalysators pro 100 Gew.-Teilen des Grundgerüstkautschuks durchgeführt wird.

12. Verfahren nach mindestens einem der Ansprüche 1 bis 11, welches in einem Schmelzprozessor durchgeführt wird.

13. Verfahren zur Herstellung einer thermoplastischen Masse auf Polyester- oder Polyamid-Basis mit verbesserter Zähigkeit und Schlagfestigkeit, umfassend die zuerstige Bildung einer Vormischung durch ein Verfahren nach mindestens einem der Ansprüche 1 bis 12 und danach die Vermischung der Vormischung mit einer zusätzlichen Menge des Matrixharzes.

14. Verfahren nach Anspruch 13, wobei die zusätzliche Menge an Matrixharz den Rest der 20-80 % des bei der Herstellung der Vormischung verwendeten Matrixharzes darstellt.

15. Verfahren nach Anspruch 13, wobei die zusätzliche Menge an Matrixharz den Rest der 20-60 % des bei der Herstellung der Vormischung verwendeten Matrixharzes darstellt.

## Revendications

1. Procédé de fabrication d'un mélange maître destiné à être mélangé avec une résine de matrice constituée de polyester ou de polyamide, pour former une composition de moulage thermoplastique, le procédé comprenant la réaction, en une seule étape, en présence d'un initiateur de radicaux libres, de 50 à 20 parties en poids de résine de matrice constituée de polyester ou de polyamide avec de 50 à 80 parties en poids de caoutchouc de squelette choisi parmi les composants caoutchouteux formés par interpolymérisation de l'éthylène, d'une ou plusieurs monooléfines en C₃-C₁₆ et d'un ou plusieurs polyènes, les caoutchoucs copolymères formés par copolymérisation de l'éthylène et d'une ou de plusieurs mono-oléfines en C₃-C₁₂, et les mélanges de ceux-ci, et avec de 2 à 15 parties en poids pour 100 parties en poids du caoutchouc de squelette d'un ester d'acide acrylique ou méthacrylique ayant une fonctionnalité époxyde sur la fraction alcoxy.

2. Procédé selon la revendication 1, qui comprend la réaction de 40 à 20 parties en poids de résine de matrice avec de 60 à 80 parties en poids de caoutchouc de squelette.

3. Procédé selon la revendication 1 ou 2, dans lequel le caoutchouc copolymère éthylène/mono-oléfine est un caoutchouc copolymère éthylène-propylène.

4. Procédé selon la revendication 3, dans lequel le caoutchouc copolymère éthylène/propylène contient des motifs d'éthylène et de propylène dans un rapport molaire de 10-95 à 90-5.

5. Procédé selon l'une quelconque des revendications 1 à 4, dans lequel le caoutchouc éthylène/mono-oléfine/polyène contient des motifs d'éthylène et de mono-oléfine dans un rapport molaire de 10-95 à 90-5.

6. Procédé selon l'une quelconque des revendications 1 à 5, dans lequel la quantité de polyène dans le caoutchouc éthylène/mono-oléfine/polyène est telle qu'elle fournit jusqu'à 20 groupes C=C pour 1000 atomes de carbone dans le caoutchouc.

7. Procédé selon l'une quelconque des revendications 1 à 6, dans lequel le caoutchouc éthylène/mono-oléfine/polyène est un caoutchouc éthylène/propylène/polyène.

8. Procédé selon la revendication 7, dans lequel le polyène est l'éthylidène-5 norbornène-2.

9. Procédé selon l'une quelconque des revendications 1 à 8, dans lequel l'ester à fonctionnalité époxyde est l'acrylate de glycidyle ou le méthacrylate de glycidyle.

10. Procédé selon l'une quelconque des revendications 1 à 9, qui est effectué à une température de 175-290°C (350-550°F).

11. Procédé selon l'une quelconque des revendications 1 à 10, qui est effectué en présence de 0,1 à 3,0 parties en poids de catalyseur de type peroxyde pour 100 parties en poids de caoutchouc de squelette.

12. Procédé selon l'une quelconque des revendications 1 à 11, qui est effectué dans un dispositif de traitement à l'état fondu.

13. Procédé de fabrication d'une composition thermoplastique à base de polyester ou de polyamide, présentant une dureté et une résistance au choc améliorées, comprenant tout d'abord la formation d'un mélange maître par un procédé tel que défini à l'une quelconque des revendications 1 à 12, puis le mélange du mélange maître avec une quantité supplémentaire de la résine de matrice.

14. Procédé selon la revendication 13, dans lequel la quantité supplémentaire de résine de matrice constitue le complément des 20-80 pour cent de la résine de matrice utilisée dans la fabrication du mélange maître.

15. Procédé selon la revendication 13, dans lequel la quantité supplémentaire de la résine de matrice constitue le complément des 20-60 pour cent de la résine de matrice utilisée dans la fabrication du mélange maître.
